# NEUE EUROPÄISCHE PATENTSCHRIFT

(11) **EP 1 305 154 B2**
(45) Veröffentlichungstag und Bekanntmachung des Hinweises auf die Entscheidung über den Einspruch: **22.07.2009**
(45) Hinweis auf die Patenterteilung: 27.04.2005
(21) Anmeldenummer: 01962909.6
(22) Anmeldetag: 03.08.2001
(51) Int. Cl.: B29C 65/34, B29K 23/00

(54) **VORRICHTUNG ZUM VERBINDEN VON BAUTEILEN AUS SCHMELZBAREM KUNSTSTOFF**
DEVICE FOR CONNECTING COMPONENTS, WHICH CONSIST OF FUSIBLE PLASTIC
DISPOSITIF PERMETTANT DE LIER DES COMPOSANTS EN MATIERE PLASTIQUE FUSIBLE

(30) Priorität: 04.08.2000 DE 20013596 U
(43) Veröffentlichungstag der Anmeldung: 02.05.2003
(73) Patentinhaber: Friatec Aktiengesellschaft, 68229 Mannheim (DE)
(72) Erfinder: MÜLLER, Gerhard, 68229 Mannheim (DE); SICHLER, Wolfgang, 68239 Mannheim (DE); MAIER, Fabian, 67368 Westheim (DE)
(74) Vertreter: Tönhardt, Marion
(86) Internationale Anmeldenummer: PCT/EP2001/009052
(87) Internationale Veröffentlichungsnummer: WO 2002/011973

(56) Entgegenhaltungen:
- EP-A- 0 838 325
- WO-A-02/11973
- WO-A-93/22127
- DE-A- 3 422 074
- DE-C- 4 342 302
- JP-A- 08 224 784
- JP-A- 08 277 988
- JP-A- 10 220 676
- JP-A- 10 246 381
- JP-A- 10 246 382
- JP-A- 11 254 539
- SU-A- 828 559
- SU-A- 1 174 282
- SU-A- 1 666 342
- SU-A- 1 684 083
- US-A- 4 553 021

## Beschreibung

Die Erfindung bezieht sich auf eine Vorrichtung zum Verbinden von Bauteilen aus schmelzbarem Kunststoff, nämlich von Rohren einer Kraftstoffleitung oder einer solchen mit einem Kraftstofftank eines Fahrzeuges gemäß den im Oberbegriff des Patentanspruchs 1 angegebenen Merkmalen.

Aus der EP-A-0 919 761 ist eine derartige Vorrichtung bekannt, welche einen Muffenkörper zum Verbinden zweier Rohrenden enthält. In der Innenfläche des im wesentlichen hohlzylindrischen Muffenkörpers ist ein Heizelement angeordnet, welches als eine Heizwicklung aus einem Widerstandsdraht ausgebildet ist und welches mit Strom beaufschlagbar ist bzw. welchem elektrische Energie zuführbar ist. Die Drahtenden des als Heizwendel ausgebildeten Heizelements sind nach außen in Steckerbuchsen geführt und mittels entsprechenden Kontaktelementen von Anschlußleitungen ist die elektrische Verbindung mit einem Schweißgerät herstellbar, um dem Heizelement Strom zuzuführen und hierbei den Kunststoff derart zu erwärmen, daß eine Elektro-Schweißverbindung herstellbar ist. Derartige Elektro-Schweißmuffen haben sich zum Verbinden von Rohren in Versorgungsnetzen, wie beispielsweise in Wasserleitungen oder Gasleitungen, sehr gut bewährt, doch erfordert die Handhabung und die Herstellung der elektrischen Verbindung mit dem Schweißgerät praktische Erfahrungen des Personals und ferner ist eine sorgfältige Vorbereitung und Durchführung des Schweißvorgangs erforderlich. Auch erfordert die Fertigung derartiger Schweißmuffen, insbesondere hinsichtlich der Kontaktierung der Drahtenden in den genannten Buchsen einen erheblichen Aufwand. Zur Vorbereitung und Durchführung der Elektroschweißung müssen diverse Maßnahmen manuell vom Personal durchgeführt werden, wodurch ein erheblicher Zeit- und Montageaufwand bedingt ist.

Vor allem in Kraftstofftanksystemen in der Automobiltechnik mit einem Kraftstofftank aus Kunststoff und einem damit zu verbindenden Kraftstoffbetankungsrohr besteht derzeit die Verbindungstechnik in der Verwendung von Schlauchverbindungsschellen oder der Spiegelschweißung der Verbindungsstellen. Insoweit ist nachteilig, daß keine ausreichende Diffusionssperre vorhanden ist und eine aufwendige Montage während der Produktion erforderlich ist, zumal diverse unterschiedliche Bauteile benötigt werden. Auch erfordert eine Reparatur oder ein Austausch einzelner Komponenten einen erheblichen Aufwand. Des weiteren besteht das Problem der Positionierung von Zusatzeinrichtungen, wie Kraftstoffpumpe, Schlauchhalterung, Sensoren usw. in und auf dem Tank. Das derzeit insoweit angewandte Spiegelschweißvertahren erweist sich gerade im Innenbereich des Tanks und/oder auf nicht ebenen Flächen als schwierig. Zudem sei darauf verwiesen, daß aus Diffusionsgründen alle zusätzlichen Öffnungen am Kraftstofftank zu vermeiden sind, so daß die Positionierung von Zusatzeinrichtungen in entfernten und/oder schwer zugänglichen Tankbereichen einen erheblichen Aufwand erfordert und oftmals ohne Hilfsöffnung nicht möglich ist. Bei der Spiegelverschweißung von Zusatzeinrichtungen oder sonstigen Teilen im Inneren des Tanks wird durch die vorhandene Tanköffnung, nämlich die Tankstutzenöffnung, ein Heizspiegel mit Hilfe aufwendiger Teleskoptechnik an die Schweißposition gebracht, um dort die Tankwandung auf- bzw. anzuschmelzen. Da aus Platzgründen ein derartiges Zusatzteil nicht direkt mitgeführt werden kann, muß zuerst der Schweißspiegel entfernt und nachfolgend in aufwendiger Weise das Zusatzteil an die gewünschte Position gebracht werden. Da für eine gute Schweißverbindung eine vorgegebene Schmelztemperatur und ferner ein Anpreßdruck erforderlich ist, ist insoweit die Prozeßführung sehr schwierig und aufwendig.

Eine Vorrichtung der eingangs genannten Gattung ist aus der DE 34 22 074 A1 bekannt.
Dort werden zwei Bauteile, nämlich ein Rohr und eine Muffe, konisch kalibriert und mittels eines eingefügten, mit Heizdraht versehenen Schweißplättchens durch den senkrecht auf die Schweißfläche wirkenden Anpreßdruck ohne Wulstbildung vollständig miteinander verbunden. Der Heizdraht ist dabei in das Schweißplättchen eingearbeitet.

Hiervon ausgehend liegt der Erfindung die Aufgabe zugrunde, eine Vorrichtung vorzuschlagen, welche mit einfachen Mitteln und mit geringem Aufwand eine funktionssichere Schweißverbindung der Bauteile gewährleistet. Die Vorbereitung und die Herstellung der Verbindung soll einen geringen Fertigungs- und Montageaufwand erfordern und/oder die Herstellung der Verbindung soll möglichst weitgehend automatisiert und/oder auf automatischen Produktionsanlagen durchführbar sein.

Die Lösung dieser Aufgabe erfolgt gemäß den im Patentanspruch 1 angegebenen Merkmalen.

Die vorgeschlagene Vorrichtung zeichnet sich durch einen einfachen konstruktiven Aufbau aus und ermöglicht mit einem geringen Aufwand die Herstellung der Schweißverbindung. Das das Heizelement enthaltende Bauteil besitzt einen Haltekörper, auf welchem die zum elektrischen Anschluß dienenden, insbesondere flächenförmig angeordneten Enden des Heizelements geführt sind und welcher für das Festhalten des Bauteils mittels eines Haltewerkzeugs ausgebildet ist. Steckerbuchsen oder dergleichen zur Herstellung der Verbindung mit einem Schweißgerät sind nicht erforderlich, da die Kontaktierung über den Haltekörper und das Haltewerkzeug erfolgt, welches insbesondere zangenartig ausgebildet ist, um zur Vorbereitung des Schweißens das genannte Bauteil aufzunehmen und während des Schweißens über geeignete Kontaktelemente die elektrische Verbindung mit dem Heizelement sicherzustellen. Das Bauteil ist bevorzugt muffenförmig ausgebildet und enthält auf einer Außenfläche ebenso wie auf einer Innenfläche das Heizelement oder Teile desselben und wird in einem Ringspalt zwischen den miteinander zu verbindenden Bauteilen plaziert, welche zum einen als Muffe und zum anderen als ein Rohrende ausgebildet sind. Die Muffe kann im Rahmen der Erfindung Bestandteil eines Tanks oder einer Rohrleitung sein, welche zur Aufnahme bzw. zum Befüllen von Kraftstoff in einem Kraftfahrzeug vorgesehen sind. Die Muffe ist als ein im Bereich der Tanköffnung nach innen eingezogener ringförmiger, bevorzugt einteilig mit dem Tank verbundener Abschnitt ausgebildet. Dies bringt den wesentlichen Vorteil, daß die Verbindung alle Anforderungen und Spezifikationen der Automobiltechnik erfüllt, insbesondere die Permeabilität von Kraftstoff an die Umwelt erheblich reduziert. Es wird eine verbesserte Diffusionsdichtigkeit und eine längskraftschlüssige Verbindung zwischen dem Kraftstoffbetankungsrohr und dem Kraftstofftank mit hoher Funktionssicherheit gewährleistet.

In einer alternativen Ausgestaltung kann das mit dem Heizelement versehene Bauteil zur Aufnahme und Positionierung von Zusatzeinrichtungen, wie eine Kraftstoffpumpe, Schlauchhalterungen, Sensoren oder dergleichen in und auf dem Kraftstofftank ausgebildet sein. In der Automobiltechnik bringt die vorgeschlagene Vorrichtung den wesentlichen Vorteil, daß die vorgeschlagene Vorrichtung und /oder Verbindung alle Anforderungen und Spezifikationen erfüllt, insbesondere Permeabilität von Kraftstoff an die Umwelt erheblich reduziert. In der Ausführungsform mit einem Kraftstofftank enthält dieser im Bereich der Tankstutzenöffnung das muffenförmige Bauteil, welches als ein in das innere des Tanks eingezogener ringförmiger Abschnitt bzw. als eine derartige Muffe ausgebildet ist, in welchem das Kunststoffrohr zum Betanken unter Bildung eines umlaufenden Ringspaltes eingesetzt ist, wobei in den genannten Ringspalt das als Schweißmuffe ausgebildete Bauteil mit dem Heizelement eingesetzt ist. In der Ausführungsform zur Verbindung von zwei Rohren, insbesondere einer Kraftstoffleitung eines Kraftfahrzeuges, ist das eine Rohrende als Muffe ausgebildet, in welche das zu verbindende Rohr unter Bildung eines Ringspaltes einsetzbar ist, wobei in letzteren wiederum das als Schweißmuffe ausgebildete und das Heizelement aufweisende Bauteil eingesetzt ist. Des weiteren kann das mit dem Heizelement versehene Bauteil im Bereich einer Stirnfläche oder Ringfläche das Heizelement enthalten, wobei die Flächenkontur entsprechend der Flächenkontur des anderen Bauteils eben, konkav, konvex oder ähnlich ausgebildet sein kann. Hierbei wird während des Schweißens zwischen dem letztgenannten Bauteil und dem anderen Bauteil, insbesondere der Wand eines Kraftstofftanks, in der erforderlichen Weise mit zusätzlichen Anpreßmitteln der Anpreßdruck erzeugt und/oder aufrechterhalten.

Der Haltekörper des das Heizelement enthaltenden Bauteils ist in vorteilhafter Weise als ein Segment oder als Flansch derart ausgebildet, daß das genannte Haltewerkzeug an jenem angreifen und den elektrischen Kontakt bzw. die elektrische Verbindung mit dem Heizelement herstellen kann. Die Kontaktelemente des Heizelements sind bevorzugt derart einander gegenüberliegend angeordnet, daß beim Angreifen und/oder Anpressen und/oder Festhalten des genannten Bauteils mit dem Haltewerkzeug die elektrische Verbindung mit dem Heizelement hergestellt ist. Das Heizelement besteht in zweckmäßiger Weise aus Draht und/oder ist als eine Wicklung ausgebildet. Des weiteren kann das Heizelement bzw. der oder die elektrischen Leiter auf die zu verschweißende Oberfläche des genannten Bauteils aufgebracht sein und insbesondere aus elektrisch leitfähigem Material aufgedampft sein oder als Metallgitter oder als elektrisch leitende Kohlenstoffasern oder aus elektrisch leitfähigem Kunststoff oder Polymeren ausgebildet sein. Die Zuführung der Schweißenergie mittels des Heizelements kann durch elektrische Widerstandsheizung ebenso erfolgen wie durch Anwendung der Induktions- oder Mikroweltentechnologie. Unabhängig von der jeweiligen Ausbildung und der konkreten Ausgestaltung des Heizelements kommt es im Rahmen der Erfindung entscheidend darauf an, daß die elektrischen Verbindungen und/oder die Drahtenden oder dergleichen auf den Haltekörper derart geführt sind, daß mittels des Haltewerkzeugs, insbesondere mittels im Haltewerkzeug angeordnete Kontaktelemente der elektrische Anschluß an ein Schweißgerät erfolgt, welches die zum Schweißen erforderliche Spannung und/oder den erforderlichen Strom bereitstellen kann.

Besondere Ausgestaltungen und Weiterbildungen in der Erfindung sind in den Unteransprüchen sowie der nachfolgenden Beschreibung angegeben.

Die Erfindung wird nachfolgend anhand der in der Zeichnung dargestellten besonderen Ausführungsbeispiele näher erläutert, ohne daß insoweit eine Beschränkung erfolgt. Es zeigen:
- Fig. 1: teilweise einen Längsschnitt durch einen Kraftstofftank und das mit diesem mittels einer Schweißmuffe verbundenen Rohres zur Kraftstoffbetankung,
- Fig. 2 - 4: eine schematische Darstellung zur Herstellung der Schweißverbindung,
- Fig. 5 - 8: Darstellungen einer weiteren Ausführungsform gemäß Fig. 4 während verschiedener Verfahrensschritte zur Herstellung der Verbindung mit einem zangenartigen Haltekörper,
- Fig. 9: eine weitere Ausführungsform zur Verbindung zweier Rohre, insbesondere einer Kraftstoffleitung,
- Fig. 10: eine perspektivische Darstellung des mit dem Heizelement versehenen Bauteils gemäß Fig. 9,
- Fig. 11: eine weitere Ausführungsform eines Bauteils, welches im Bereich einer Stirnfläche das Heizelement enthält und zur Positionierung von Zusatzeinrichtungen dient,
- Fig. 12: eine seitliche Ansicht des Bauteils gemäß Fig. 11,
- Fig. 13 - 16: schematische Darstellungen zur Positionierung des Bauteils gemäß Fig. 11 im Tankinneren,
- Fig. 17: eine weitere Ausführungsform des Bauteils mit einem auf einer Ringfläche angeordneten Heizelement,
- Fig. 18: eine schematische Darstellung des Bauteils gemäß Fig. 17 in einem Kraftstofftank.

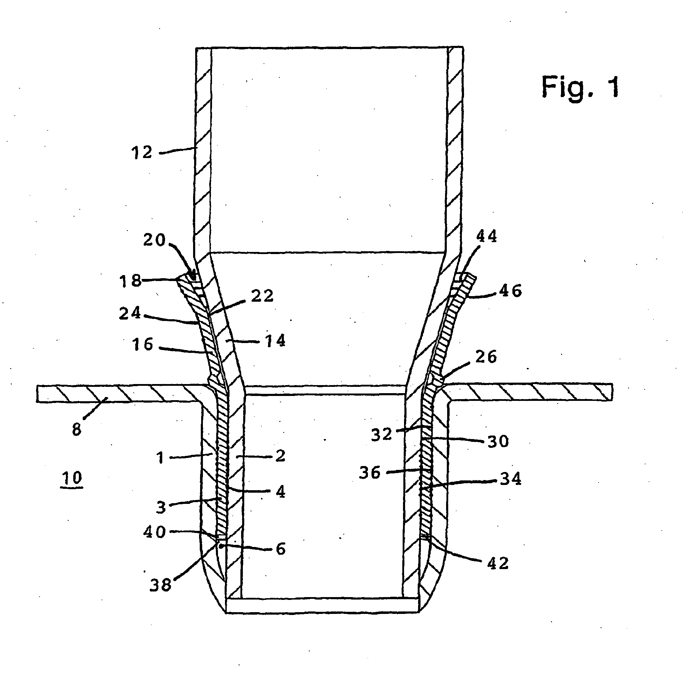

Fig. 1 zeigt in einem Längsschnitt ein erstes Bauteil 1, ein zweites Bauteil 2 und ein weiteres Bauteil 3, welches ein Heizelement 4 zum Verbinden des ersten und zweiten Bauteils 1, 2 aufweist. Das erste Bauteil 1 ist als eine Muffe ausgebildet, welche unter Bildung eines das weitere Bauteil 3 aufnehmenden Ringspaltes 6 das zweite Bauteil umgibt. Das erste Bauteil 1 ist Bestandteil eines hier nur teilweise dargestellten Tanks 8, erstreckt sich in den Innenraum 10 desselben und ist als ein im Bereich der Tanköffnung nach innen eingezogener ringförmiger Abschnitt ausgebildet. Das zweite Bauteil 2 ist Bestandteil eines hier gleichfalls nur teilweise dargestellten Rohres 12, welches zur Befüllung des Tanks 8 mit Kraftstoff dient. Die genannten Bauteile 1, 2 und 3 bestehen aus einem schmelzbaren und/oder thermoplastischen Kunststoff, wie insbesondere Polyethylen (PE). Das zweite Bauteil 2 bzw. das Rohr 12 enthält einen außerhalb des Tanks 8 befindlichen kegelförmigen Abschnitt 14, welcher eine zum Innenraum 10 gerichtete Verjüngung des Rohres 12 bildet. Das weitere Bauteil 3 enthält gleichfalls außerhalb des Tanks einen Bund oder Flansch 16 derart, daß zumindest im Bereich dessen freien Endes 18 ein Freiraum 20 vorhanden ist. Der Flansch 16 und/oder dessen freies Ende 18 ist als Haltekörper für ein hier nicht dargestelltes Haltewerkzeug ausgebildet, welches einerseits im Freiraum 20 an der dortigen Innenfläche 22 und andererseits an der Außenfläche 24 des Haltekörpers 16 zum Ergreifen und festhalten desselben angreifen kann. Der Haltekörper 16 ist, wie dargestellt, zweckmäßig über den Umfang geschlossen ausgebildet, doch kann im Rahmen der Erfindung zumindest dessen freien Ende 18 auch als ein nur über einen Teil des Umfangs sich erstreckendes Segment ausgebildet sein. Das weitere Bauteil 3, welches nachfolgend auch als Schweißmuffe bezeichnet wird, enthält ferner einen Anschlag 26, durch welchen eine definierte Einstecktiefe in das erste muffenförmige Bauteil 1 sichergestellt ist. Aufgrund der konischen bzw. kegelförmigen Ausbildung des Abschnitts 14, wobei der Konuswinkel zweckmäßig mit dem des Flansches oder Haltekörpers 16 übereinstimmt, ist ferner für das Rohr 12 eine definierte Einschubtiefe in den Tank 8 vorgegeben. Der Anschlag 26 kann ringförmig über den Umfang geschlossen ausgebildet sein oder aber als eine oder mehrere radial nach außen gerichtete Nocken.

Das weitere Bauteil bzw. die Schweißmuffe 3 weist im Bereich des Ringspaltes 6 ein Heizelement 4 auf, welches sowohl an der Innenfläche 30 als auch an der Außenfläche 32 der Schweißmuffe 3 angeordnet ist. Das Heizelement 4 besitzt an der Innenfläche 30 eine innere Heizwendel 34 und an der Außenfläche 32 eine äußere Heizwendel 36 aus elektrisch leitendem Draht und/oder Widerstandsdraht, wobei die Heizwendeln 34, 36 an der Stirnfläche 38 der Schweißmuffe 3 miteinander über ein Drahtteil 40 in Verbindung stehen. Dieser Drahtteil 40 ist vorteilhaft in einer Ausnehmung 42 der Stirnfläche 38 angeordnet und somit gegen äußere Einwirkungen geschützt. Vorteilhaft weist die Stirnfläche 38 eine Anzahl derartiger sich radial erstreckender Ausnehmungen 42 auf, so daß bei der Herstellung des aus einem einzigen durchgehenden Heizdraht bestehenden Heizelements 4 der Drahtteil 40 leicht in eine dieser Ausnehmungen 42 eingelegt werden kann.

Die Enden des Heizelements 4 bzw. die freien Drahtenden 44, 46 der beiden Heizwendeln 34 und 36 sind erfindungsgemäß zum Haltekörper 16 und/oder dessen freies Ende 18 geführt, und zwar an der Innenfläche und an der Außenfläche desselben. Es ist von besonderer Bedeutung, daß die Drahtenden und/oder Kontaktelemente 44, 46 des Heizelements 4 einander gegenüberliegen. Bevorzugt sind die Kontaktelemente flächenförmig angeordnet und/oder ausgebildet. Die Enden 44, 46 bilden somit ein erstes und ein zweites flächenförmig angeordnetes Kontaktelement des Heizelements 4. Die Enden 44, 46 erstrecken sich in vorteilhafter Weise über den gesamten Umfangsbereich des Haltekörpers 16 bzw. bei segmentartiger Ausbildung desselben über einen vorgegebenen Umfangswinkel. Somit kann das bereits erwähnte Haltewerkzeug über einen vorgegebenen Umfangswinkel, zweckmäßig über den gesamten Umfangswinkelbereich von 360°, am Haltekörper 16 angreifen und hierbei die elektrische Verbindung mit dem Heizelement 4 hergestellt werden. Das Haltewerkzeug weist mit den Enden bzw. Kontaktelementen 44, 46 des Heizelements 4 korrespondierende weitere Kontaktelemente auf, welche beim Festhalten des Haltekörpers 16 die genannte elektrische Verbindung und Kontaktierung des Heizelements 4 sicherstellen.

Zur Vorbereitung der Herstellung der Schweißverbindung wird in das erste muffenförmig ausgebildete Bauteil 1 das weitere Bauteil 3 eingesetzt, wobei mittels des Anschlags 26 die Einschubtiefe definiert vorgegeben ist. Nachfolgend wird das zweite Bauteil 2 in das weitere Bauteil 3 eingesetzt, wobei aufgrund des kegelförmigen Abschnitts 14 an dem entsprechend konisch ausgebildeten Flansch oder Haltekörper 16 die Einschubtiefe gleichfalls definiert vorgegebenen ist. Alternativ kann zunächst das weitere Bauteil 3 auf das zweite Bauteil 2 entsprechend aufgeschoben werden und nachfolgend können dann das zweite Bauteil 2 und das weitere Bauteil 3 in das erste muffenförmige Bauteil 1 eingeschoben werden. Es sei an dieser Stelle festgehalten, daß die Innen- und Außendurchmesser der aneinanderliegenden Flächen der genannten Bauteile derart aufeinander abgestimmt sind, daß eine weitgehend direkte Anlage der einander zugeordneten Flächen der genannten Bauteile gewährleistet ist, damit während des Schweißens der erforderliche Anpreßdruck für eine vollständige, über den Umfang und in axialer Richtung lückenlose und dichte Elektro-Schweißverbindung hergestellt werden kann.

Wie nachfolgend noch zu erläutern ist, kann in einer besonderen Ausgestaltung der Erfindung zunächst mittels des Haltewerkzeugs das weitere Bauteil bzw. die Schweißmuffe 3 am Flansch 16 und/oder dessen freien Endes 18 erfaßt werden, um beispielsweise aus einer Lieferbox entnommen zu werden. Mittels des Haltewerkzeugs wird danach das weitere Bauteil 3 in das erste Bauteil 1 bzw. die erfindungsgemäß ausgebildete Tanköffnung eingesetzt und nachfolgend wird das Rohr 12 mit dem zweiten Bauteil 2 in das Innere des weiteren Bauteils 3 eingesetzt, wobei das genannte Haltewerkzeug unverändert mit dem Haltekörper 16 in Eingriff bleibt. Das mit dem Haltewerkzeug elektrisch verbundene Schweißgerät ist in bevorzugter Weise ferner dahingehend ausgebildet, daß die ordnungsgemäße Kontaktierung und/oder die erforderliche Ausbildung des Heizelements 4 überprüfbar ist, so daß fehlerhafte Kontaktierungen und/oder fehlerhafte weitere Bauteile 3 festgestellt werden können, welche in vorteilhafter Weise vor der Durchführung der Schweißung ausgetauscht werden, so daß fehlerhafte Verbindungen funktionssicher vermieden werden.

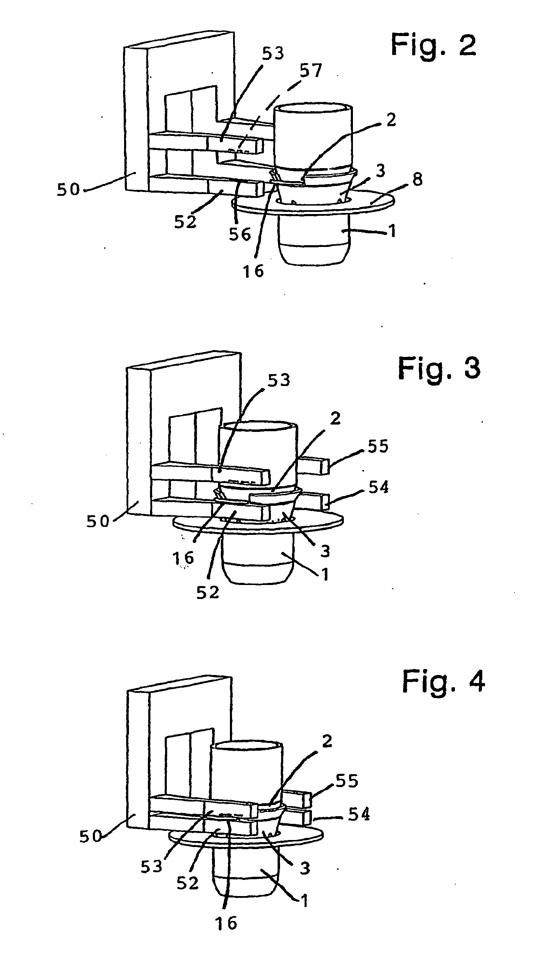

Anhand von Fig. 2 bis 4 soll die Herstellung der Elektroschweißverbindung näher erläutert werden. Gemäß Fig. 2 sind die drei Bauteile 1, 2, 3 in der oben erläuterten Weise ineinander gesetzt. Die Schweißmuffe 3 weist den hier segmentförmig ausgebildeten Haltekörper 16 auf. Das bereits Haltewerkzeug 50 enthält zwei zangenartig ausgebildete Backen 52, 53, zwischen welchen gemäß Fig. 3 der Haltekörper 16 beim Einsetzen der genannten Bauteile 1, 2, 3 in das Haltewerkzeug 50 positionierbar ist. Das Haltewerkzeug 50 weist wenigstens einen weiteren Backen 54, 55 auf, welcher oder welche zu den beiden erstgenannten Backen 52, 53 vorgegebene Abstände aufweisen, welche im wesentlichen den zugeordneten Außendurchmessern der Bauteile 1, 2, 3 entsprechen, um eine definierte Ausrichtung bezüglich des Haltewerkzeugs 50 sicherzustellen. Gemäß Fig. 4 sind die beiden oberen Backen 53, 55 derart nach unten gefahren, daß der Haltekörper 16 zwischen den beiden Backen 52, 53 eingespannt ist, wobei ein definierter Anpreßdruck vorgegeben ist, um eine sichere Kontaktierung mit den beiden Kontaktelementen der Schweißmuffe 3 zu gewährleisten. Wie aus Fig. 2 ersichtlich, besitzt der untere Backen 52 des Haltewerkzeugs 50 ein weiteres Kontaktelement 56 und entsprechend der obere Backen 53 ein weiteres Kontaktelement 57, wobei diese Kontaktelemente 56, 57 über hier nicht dargestellte elektrische Leitungen mit dem Schweißgerät verbunden sind. Alternativ kann ferner einer der gemäß Zeichnung hinteren Backen 54, 55 ein entsprechendes Kontaktelement aufweisen, um mit einem auf einem dort vorgesehenen weiteren Haltekörper angeordneten Ende oder Kontaktelement des Heizelements die elektrische Verbindung herzustellen.

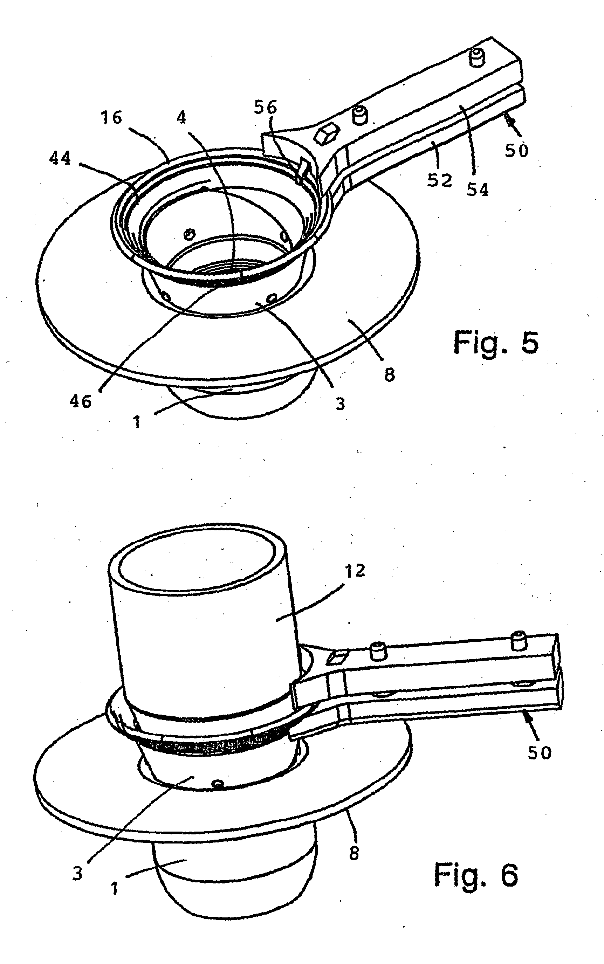

Fig. 5 zeigt ein weiteres Ausführungsbeispiel ähnlich Fig. 1, wobei jedoch das Rohr mit dem zweiten Bauteil nicht dargestellt ist. Die Schweißmuffe 3 ist mittels des zangenförmig ausgebildeten Haltewerkzeugs 50 in die Tanköffnung des hier nur teilweise dargestellten Tanks 8 eingesetzt. Das Haltewerkzeug 50 enthält die beiden gegeneinander bewegbar angeordneten Backen 52, 54, welche den als ringförmigen Flansch ausgebildeten Haltekörper 16 ergreifen und festhalten. In der Innenfläche des Haltekörpers 16 ist das innere Kontaktelement 44 bzw. das innenliegende Drahtente des Heizelements 4 zu erkennen. Das innere Kontaktelement 44 ist als wenigstens eine über den Umfang geschlossen ausgebildete Windung ausgebildet, mit welcher das weitere Kontaktelement 56 des Haltewerkzeugs 50 zur sicheren Kontaktierung angreift. Das weitere Kontaktelement 56 liegt bevorzugt unter einer vorgebbaren Vorspannung, die insbesondere mittels einer hier nicht weiter dargestellten Feder oder dergleichen erzeugt ist, an dem inneren Kontaktelement 44 an. Es sei hier festgehalten, daß gleichfalls an der Außenfläche des Haltekörpers 16 das Drahtende mit wenigstens einer über den gesamten Umfang sich erstreckenden Windung angeordnet ist, so daß ein analog angeordnetes Kontaktelement des unteren Backens 52 zur sicheren Kontaktierung an dem äußeren Kontaktelement 46 anliegt. Durch die ringförmige und/oder über den gesamten Umfang geschlossene Ausbildung des inneren und des äußeren Kontaktelements ist in jeder Umfangsposition des Haltewerkzeugs 50 bezüglich der Schweißmuffe 3 somit eine sichere Kontaktierung gewährleistet.

Gemäß Fig. 6 ist das Rohr 12 mit dem zweiten Bauteil in das Innere der Schweißmuffe 3 eingesetzt. Es sei darauf hingewiesen, daß das Haltewerkzeug 50 unverändert und bei Aufrechterhaltung der Kontaktierung mit den Kontaktelementen der Schweißmuffe 3 in Eingriff steht. Durch Einleitung der von dem hier nicht dargestellten Schweißgerät gelieferten Schweißteistung über die genannten Kontaktelemente in das Heizelement wird nunmehr die Elektro-Schweißverbindung des Rohres 12 über die Schweißmuffe 3 mit dem Tank 8 hergestellt.

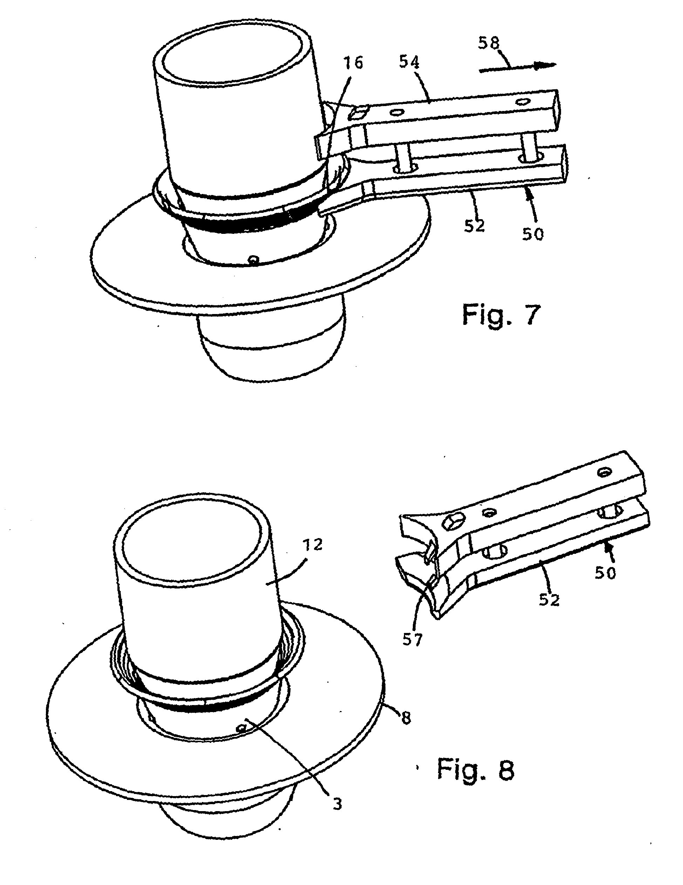

Nachfolgend wird gemäß Fig. 7 das Haltewerkzeug 50 außer Eingrifft mit der Schweißmuffe 3 gebracht. Hierzu werden die beiden Backen 52, 54 voneinander derart wegbewegt, daß nunmehr der Haltekörper 16 freigegeben ist und das Haltewerkzeug 50 in Richtung des Pfeiles 58 entfernt werden kann.

Fig. 8 zeigt nach dem Entfernen das Haltewerkzeug 50, wobei nunmehr das Rohr 12 mittels der Schweißmuffe 3 mit dem Tank 8 dicht verbunden ist. Das erwähnte weitere Kontaktelement 57 des unteren Backens 52 des zangenförmig ausgebildeten Haltewerkzeugs 50 ist hier gut zu erkennen.

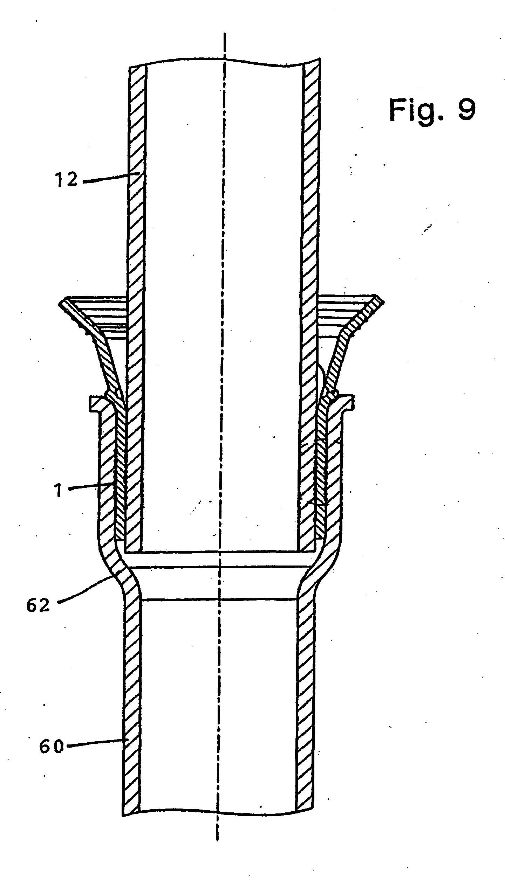

In Fig. 9 ist in einem Längsschnitt ein weiteres Ausführungsbeispiel dargestellt, in welchem das erste Bauteil 1 als Muffe eines zweiten Rohres 60 ausgebildet ist. Hierbei weist das erste Rohr 12 einen gleichbleibenden Durchmesser auf, wobei der Muffengrund 62 des ersten Bauteils 1 einen Anschlag für die Einstecktiefe des ersten Rohres 12 bildet. Im übrigen gelten obige Erläuterungen entsprechend. Die beiden Rohre 12, 60 sind bevorzugt Bestandteil einer Kraftstoffleitung eines Kraftfahrzeugs, wobei diese Kraftstoffleitung entsprechend obigen Ausführungen weiterhin mit einem Kraftstofftank verbunden ist.

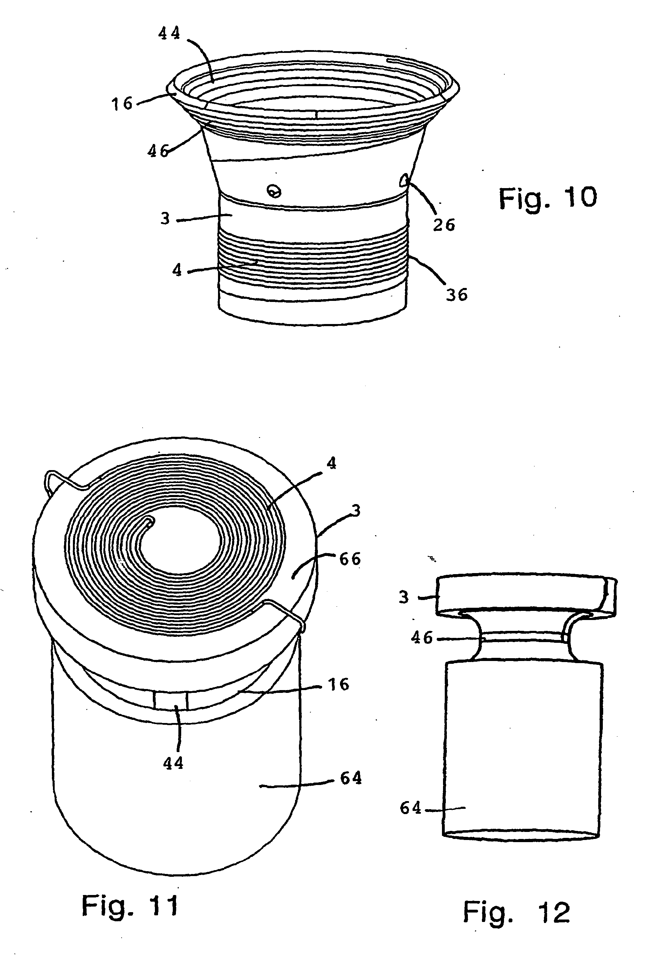

Fig. 10 zeigt die erfindungsgemäße Schweißmuffe 3 mit der äußeren Heizwendel 36 und dem äußeren Kontaktelement 46 des Haltekörpers 16. Des weiteren ist das innere Kontaktelement 44 gut zu erkennen. Die Kontaktelemente 44 und 46 enthalten mehrere über den Umfang geschlossene Windungen, so daß in jeder Position des Haltewerkzeugs eine funktionssichere Kontaktierung gewährleistet ist. Auch die Ausbildung der Anschläge 26 als radial nach außen vorstehende Nocken ist hier gut zu erkennen. Es sei festgehalten, daß das derart ausgebildete Heizelement 4 in vorteilhafter Weise aus einem einzigen durchgehenden Draht besteht, welcher in der dargestellten und erläuterten Weise an der Innenfläche und an der Außenfläche des weiteren Bauteils 3 angeordnet ist.

Fig. 11 zeigt eine besondere Ausführungsform des weiteren Bauteils 3, welches zur Positionierung von Zusatzeinrichtungen, wie Kraftstoffpumpe, Schlauchhalterung, Sensor oder dergleichen in oder auf einem ersten Bauteil, insbesondere einem Kraftstofftank dient. Das weitere Bauteil 3 ist Bestandteil eines Positionierungskörpers 64, wobei ferner der flanschartige Haltekörper 16 vorgesehen ist. Das weitere Bauteil 3 weist auf einer Stirnfläche 66 das Heizelement 4 auf, welches als eine bifilare Wicklung aus einem elektrisch leitendem Heizdraht bzw. Widerstandsdraht ausgebildet ist. Die Stirnfläche 66 weist eine vorgegebene Kontur auf, welche an die zugeordnete Kontur des ersten Bauteils bzw. des Tanks oder dergleichen angepaßt ist. Die Oberflächenkontur der Stirnfläche 66 kann, wie dargestellt, plan ausgebildet sein oder konvex oder konkav oder auf andere Weise entsprechend der Oberflächenkontur des ersten Bauteils, an welchem der Positionierungskörper 64 zu befestigen und positionieren ist. Das eine Drahtende ist auf das Kontaktelement 44 des Haltekörpers 16 geführt.

Fig. 12 zeigt das Bauteil 3 gemäß Fig. 12 in einer seitlichen Ansicht, wobei das andere Kontaktelement 46 in einem Einstrick unterhalb des Bauteils 3 gut zu erkennen ist.

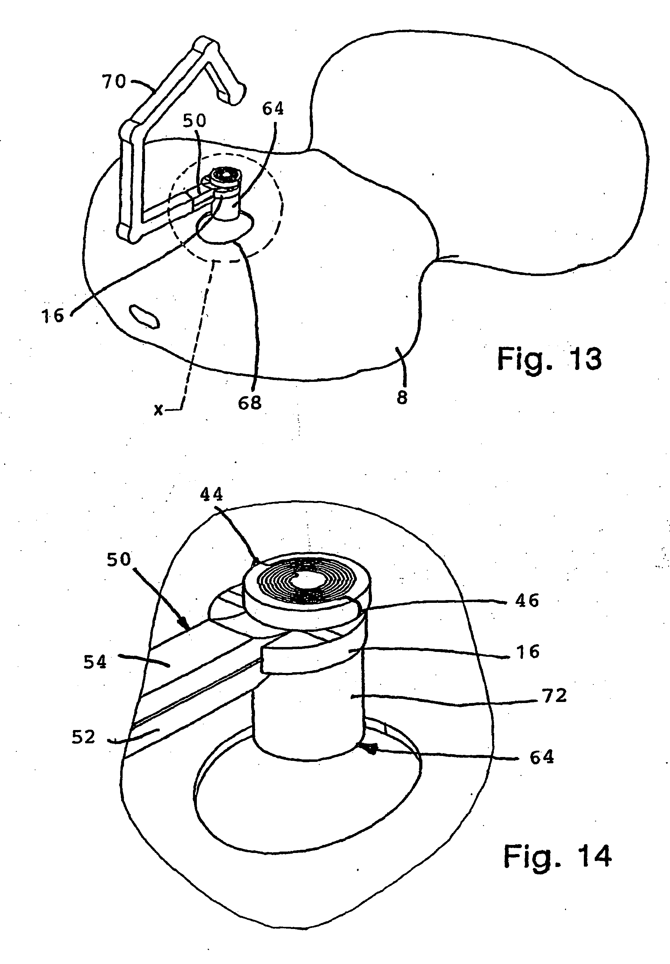

Fig. 13 zeigt schematisch den Positionierungskörper 64 zusammen mit einem Tank 8, dessen Außenkontur entsprechend den Einbaubedingungen in einem Kraftfahrzeug vorgegeben ist. Der Tank 8 enthält eine Tanköffnung 68, durch welche hindurch der Positionierungskörper 64 mit einem hier nicht zu erläuternden Werkzeug oder Handlingsgerät 70 in den Tankinnenraum einsetzbar und an der gewünschten Position an der inneren Tankwand positionierbar ist. Es sei hier festgehalten, daß erst nach der Positionierung und Herstellung der Schweißverbindung des Positionierungskörpers 64 an und mit der Tankinnenwand in der oben erläuterten Weise die Tankleitung bzw. deren Rohrende im Bereich der Tanköffnung 68 mit dem Tank 8 verbunden wird. Das Werkzeug oder Handlingsgerät 70 enthält das zangenförmige Haltewerkzeug 50, welches am Flansch 16 angreift und somit den Positionierungskörper 64 festhält.

Fig. 14 zeigt vergrößert das Detail X gemäß Fig. 13, wobei das Haltewerkzeug 50 mit den beiden Backen 52, 54 den Flansch 16 festhält. Die beiden Enden 44, 46 des Heizelements 4 sind auf den Haltekörper bzw. Flansch 16 geführt und bilden dort die Kontaktelemente oder sind mit dort vorgesehenen Kontaktelementen elektrisch, insbesondere durch Punktschweißen, verbunden.

Alternativ können die Kontaktelemente bzw. die Drahtenden auf die Außenfläche 72 des Positionierungskörpers 64 geführt, wobei die Außenfläche 72 den Haltekörper für das Haltewerkzeug bildet Bei einer solchen Ausführungsform sind die zangenförmigen Backen des Haltewerkzeugs im Vergleich mit Fig. 14 um 90° gedreht angeordnet und bezüglich des Positionierungskörpers 64 in radialer Richtung bewegbar und radial auf die Außenfläche 72 aufsetzbar und mit vorgegebener Vorspannung anpreßbar, um zum einen den Positionierungskörper 64 zu halten und zum anderen den erforderlichen Kontaktierungsdruck der weiteren Kontaktelemente zu gewährleisten.

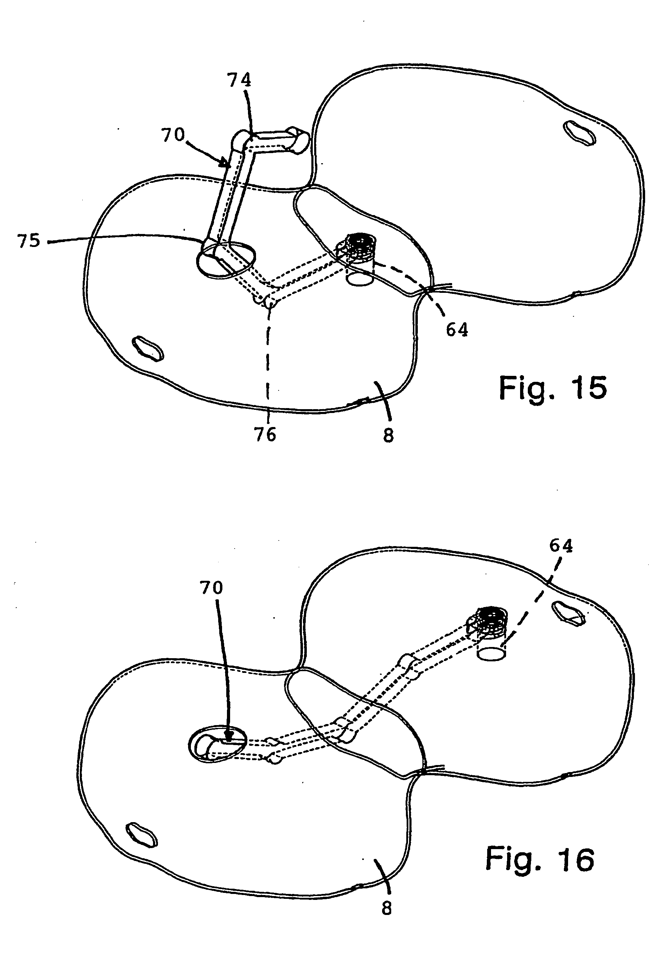

Gemäß Fig. 15 ist das Werkzeug 70, welches mehrere Gelenkverbindungen 74 bis 76 enthält, teilweise in den Innenraum des Tanks 8 eingeführt und gemäß Fig. 16 ist das Werkzeug 70 noch weiter in den Innenraum des Tanks 8 derart eingeführt, daß sich der Positionierungskörper 64 an der gewünschten Position im Tankinneren befindet. Mittels des Werkzeugs 70 wird die Stirnfläche des weiteren Bauteils des Positionierungskörpers 64 an die dortige Innenwand des Tanks angepreßt. Es sei angemerkt, daß das Werkzeug 70 elektrische Leitungen aufweist, welche die elektrische Verbindung zwischen dem Heizelement des Positionierungskörpers 64 mit dem Schweißgerät gewährleistet. Nach Einleitung der zur Herstellung der Schweißverbindung erforderlichen Schweißenergie unter Beibehaltung eines vorgegebenen Anpreßdurcks mittels des Werkzeugs oder Handlingsgeräts 70 ist eine sichere Verbindung des Positionierungskörpers 64 an der Innenwand des Tanks 18 hergestellt.

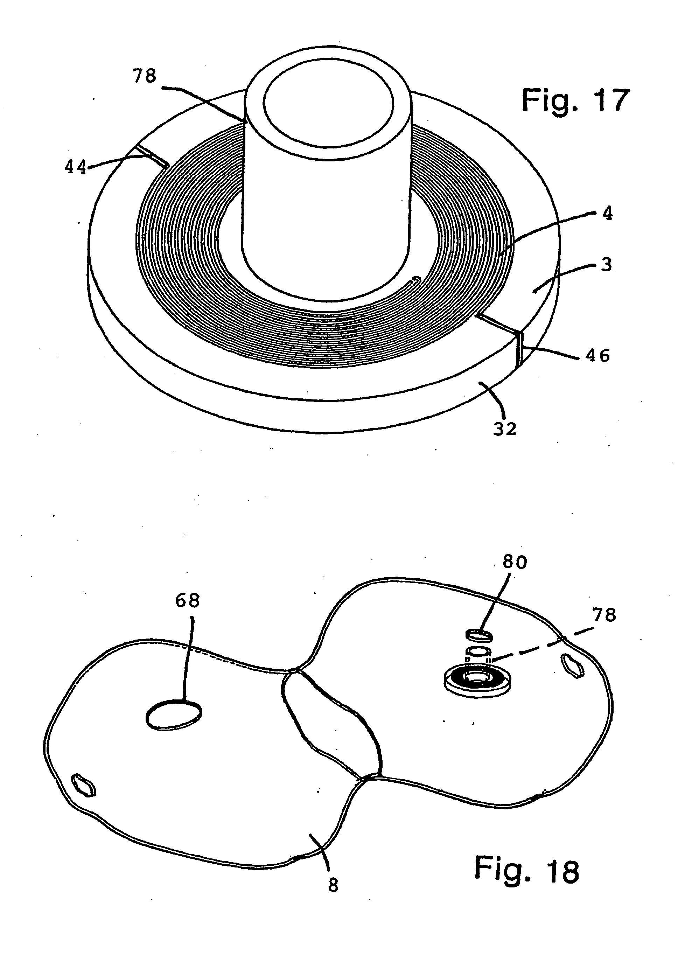

Fig. 17 und 18 zeigen ein weiteres Ausführungsbeispiel, bei welchem das weitere Bauteil 3 ein ringförmiges Heizelement 4 in Form einer bifilaren Wicklung an einer axialen Stirnfläche 66 aufweist. Wie oben erläutert, ist die Kontur dieser Stirnfläche an die Oberflächenkontur des zu verbindenden ersten Bauteils, insbesondere der Innenwand des Kraftstofftanks angepaßt. Mit dem weiteren Bauteil 3 ist ein Stutzen 78 verbunden, welcher als ein Tankabgang, beispielsweise zur Belüftung des Tanks, ausgebildet ist. Die Kontaktelemente und/oder Enden 44, 46 des Heizelements 4 sind, wie dargestellt, auf die Außenfläche des flanschartigen weiteren Bauteils 3 geführt. Das Haltewerkzeug bzw. dessen zangenförmige Backen werden zum Festhalten und Erzeugen des Kontaktdrucks in radialer Richtung bezüglich der Längsachse des Stutzens 78 an die Außenfläche 32 zwecks Halterung und Erzeugung des Kontaktdrucks für die Herstellung der Schweißverbindung angepreßt. Alternativ kann unterhalb, also hinter der Zeichenebene ein flanschartiger Haltekörper vorgesehen sein, wie es vorstehend anhand der Fig. 11 erläutert ist. Gemäß Fig. 18 besitzt der Tank eine Öffnung 80, durch welche nach der entsprechenden Positionierung des weiteren Bauteils 3 der genannte Stutzen 78 nach außen durchgreift. Zuvor wurde entsprechend obigen Ausführungen mittels eines hier nicht weiter dargestellten Werkzeugs bzw. Handlingsgeräts das weitere Bauteil 3 durch die erstgenannte Tanköffnung 68 in den Innenraum des Tanks 8 eingeführt, unterhalb der zweiten Tanköffnung 80 positioniert und schließlich derart in Richtung der Tankinnenwand bewegt, daß nachfolgend der Stutzen 78 durch die zweite Öffnung j80 nach außen geführt ist. Zum Schweißen wird mittels des Handlingsgeräts das weitere Bauteil 3 derart an die Innen Wand des Tanks 8 gepreßt, daß das Heizelement 4 mit einem vorgegebenen Anpreßdurck anliegt und nach Zufuhr der Schweißenergie eine dichte und dauerhafte Verbindung hergestellt ist.

### Bezugszeichen

- 1: erstes Bauteil / Muffe
- 2: zweites Bauteil / Rohr
- 3: weiteres Bauteil / Schweißmuffe
- 4: Heizelement
- 6: Ringspalt
- 8: Tank
- 10: Innenraum von 8
- 12: Rohr
- 14: kegelförmiger Abschnitt
- 16: Bund / Flansch / Haltekörper
- 18: freies Ende von 16
- 20: Freiraum
- 22: Innenfläche von 16
- 24: Außenfläche von 16
- 26: Anschlag
- 30: Innenfläche von 3
- 32: Außenfläche von 3
- 34: innere Heizwendel
- 36: äußere Heizwendel
- 38: Stirnfläche von 3
- 40: Drahtteil
- 42: Ausnehmung in 38
- 44: erstes Kontaktelement / Ende von 4
- 46: zweites Kontaktelement / Ende von 28
- 50: Haltewerkzeug
- 52 - 55: zangenförmige Backe
- 56, 57: weiteres Kontaktelement von 50
- 58: Pfeil
- 60: zweites Rohr
- 62: Muffengrund
- 64: Positionierungskörper
- 66: Stirnfläche
- 68: Tanköffnung
- 70: Werkzeug / Handlingsgerät
- 72: Außenfläche von 64
- 74 - 76: Gelenkverbindung von 70
- 78: Stutzen
- 80: zweite Öffnung in 8

## Patentansprüche

1. Vorrichtung zum Verbinden von Bauteilen (1, 2, 3) aus schmelzbarem Kunststoff nämlich von Rohren (12, 60) einer Kraftstoffleitung oder einer solchen mit einem Kraftstofftank (8) eines Fahrzeuges, mit einem Heizelement (4), über dessen Enden (44, 46) elektrische Energie zuführbar ist,
**dadurch gekennzeichnet, daß** die Vorrichtung ein Haltewerkzeug (50) aufweist und daß das eine Bauteil (3) einen Haltekörper (16) für das Haltewerkzeug (50) aufweist und die beiden Enden (44, 46) des Heizelements (4) auf den Haltekörper (16) geführt sind und mit Kontaktelementen (56, 57) des Haltewerkzeugs (50) in Eingriff bringbar sind.

2. Vorrichtung nach Anspruch 1, **dadurch gekennzeichnet, daß** die Enden (44, 46) des Heizelements (4) einander gegenüberliegend angeordnet sind und/oder flächenförmig angeordnet oder ausgebildet sind und/oder mit flächenförmigen Kontaktelementen auf dem Haltekörper (16) verbunden sind.

3. Vorrichtung nach Anspruch 1 oder 2, **dadurch gekennzeichnet, daß** der Haltekörper (16) flanschförmig oder segmentförmig ausgebildet ist und/oder auf einander gegenüberliegenden Flächen (22, 24) die Enden oder Kontaktelemente (44, 46) aufweist.

4. Vorrichtung nach einem der Ansprüche 1 bis 3, **dadurch gekennzeichnet, daß** das Haltewerkzeug nach Art einer Zange ausgebildet ist und/oder zwei gegeneinander bewegbare Backen (52, 54) aufweist, zwischen welchen der Haltekörper (16) festspannbar ist und/oder mittels welchen die elektrische Verbindung mit einem Schweißgerät herstellbar ist.

5. Vorrichtung nach einem der Ansprüche 1 bis 4, **dadurch gekennzeichnet, daß** das weitere Bauteil (3) als Heizelement (4) ein Metallgitter, Metallfäden, Metallpartikel oder -drähte, oder eine Schicht oder Leiter aus elektrisch leitendem Kunststoff und/oder Polymer enthält, wobei die Einbringung der Energie zum Schweißen mittels Stromfluß oder Induktion oder Mikröwellentechnologie erfolgt.

6. Vorrichtung nach einem der Ansprüche 1 bis 5, **dadurch gekennzeichnet, daß** das das Heizelement (4) enthaltende Bauteil (3) als eine Schweißmuffe ausgebildet ist, welche auf einer Innenfläche (30) und einer Außenfläche (32) das Heizelement (4) aufweist und/oder das das Heizelement (4) wenigstens eine Heizwendel (34, 36) enthält.

7. Vorrichtung nach einem der Ansprüche 1 bis 5, **dadurch gekennzeichnet, daß** der Kraftstofftank (8) im Bereich einer Tanköffnung (68) das erste Bauteil (1) in Form eines eingezogenen ringförmigen Abschnitts und/oderals eine in den innenraum (10) zumindest teilweise hineinragende Muffe aufweist und daß das Ende des Kraftstoff-Betankungsrohres (12) als das zweite Bauteil (2) ausgebildet und unter Bildung eines Ringspaltes (6) in das erste Bauteil (1) eingesetzt ist, wobei in dem Ringspalt (6) das als Schweißmuffe ausgebildete weitere Bauteil (3) angeordnet ist.

8. Vorrichtung nach einem der Ansprüche 1 bis 6, **dadurch gekennzeichnet, daß** das erste Bauteil (1) als eine Muffe eines zweiten Rohres (60) ausgebildet ist, wobei das zweite Bauteil als ein zusammen mit dem weiteren als Schweißmuffe ausgebildeten Bauteil (3) in die Muffe (1) einsetzbar ist.

9. Vorrichtung nach Anspruch 5, **dadurch gekennzeichnet, daß** das weitere Bauteil (3) als Schweißmuffe ausgebildet ist und zumindest teilweise in einem Ringspalt (6) in einem ersten als Muffe ausgebildeten Bauteil (1) und einem zweiten als Rohrende ausgebildeten Bauteil (2) angeordnet ist und/oder daß der Haltekörper (16) als ein bevorzugt konischer Bund oder Flansch ausgebildet ist, der in einem vorgegebenen Winkel von der Außenfläche des Haltekörpers (19) wegragt.

10. Vorrichtung nach einem der Ansprüche 6 bis 8, **dadurch gekennzeichnet, daß** der Haltekörper (16) des muffenförmigen weiteren Bauteils (3) aus dem ersten als Muffe ausgebildeten Bauteil (1) herausgeführt ist und zumindest teilweise konisch nach außen sich öffnend ausgebildet ist.

11. Vorrichtung nach einem der Ansprüche 1 bis 5, **dadurch gekennzeichnet, daß** das Heizelement (4) an einer Stirnfläche (66) des Bauteils (3) angeordnet ist und insbesondere als Bestandteil eines Positionierungskörpers (64) ausgebildet ist oder daß das Heizelement (4) ringförmig auf einer Stirnfläche des Bauteils (3) angeordnet ist, insbesondere auf der gleichen Seite wie ein mit dem Bauteil (3) verbundener Stutzen (78).

## Claims

1. A device for connecting fusible plastic components (1, 2, 3), namely, pipes (12, 60) of a fuel line or of such a line to a fuel tank (8) of a vehicle, comprising a heating element (4) via the ends (44, 46) of which electrical energy can be supplied,
**characterised in that** the device comprises a retaining tool (50) and one component (3) comprises a retaining member (16) for the tool (50) and the two ends (44, 46) of the heating element (4) are guided on to the retaining member (16) and can be brought into engagement with contact elements (56, 57) of the retaining tool (50).

2. A device according to claim 1, **characterised in that** the ends (44, 46) of the heating element (4) are disposed opposite one another and/or are laminar in arrangement or construction and/or are connected to laminar contact elements on the retaining member (16).

3. A device according to claim 1 or 2, **characterised in that** the retaining member (16) is in the form of a flange or segment and/or has the ends or contact elements (44, 46) on opposite surfaces (22, 24).

4. A device according to any of claims 1 to 3, **characterised in that** the retaining element is in the form of tongs and/or has two jaws (52, 54) movable relative to one another and between which the retaining member (16) can be tightly clamped and/or by means of which the electric connection can be made to a welding apparatus.

5. A device according to any of claims 1 to 4, **characterised in that** the additional component (3) contains a heating element (4) in the form of a metal grating, metal filaments, metal particles or wires, or a layer or conductor made of electrically conductive plastic and/or polymer, wherein the energy for welding is supplied by a flow of current or by induction or microwave technology.

6. A device according to any of claims 1 to 5, **characterised in that** the component (3) containing the retaining element (4) is a welding sleeve which comprises the heating element (4) on an inner surface (30) and an outer surface (32) and/or the heating element (4) contains at least one heating coil (34, 36).

7. A device according to any of claims 1 to 5, **characterised in that** the fuel tank (8) in the region of a tank opening (68) comprises the first component (1) in the form of a constricted annular portion and/or a sleeve projecting at least partly into the interior (10), and the end of the fuel pipe (12) forms the second component (2) and is inserted into the first component (1) leaving an annular gap (6), wherein the additional component (3) in the form of the welding sleeve is disposed in the annular gap (6).

8. A device according to any of claims 1 to 6, **characterised in that** the first component (1) is a sleeve of a second pipe (60), wherein the second component is insertable into the sleeve (1) together with the additional component (3) in the form of a welding sleeve.

9. A device according to claim 5, **characterised in that** the additional component (3) is a welding sleeve and is at least partly disposed in an annular gap (6) in a first sleeve-like component (1) and a second component (2) in the form of a pipe end and/or the retaining member (16) is a preferably conical collar or flange which projects at a set angle from the outer surface of the retaining member (19).

10. A device according to any of claims 6 to 8, **characterised in that** the retaining member (16) of the sleeve-like additional component (3) extends from the first component (1) in the form of a sleeve and opens at least partly conically outwards.

11. A device according to any of claims 1 to 5, **characterised in that** the heating element (4) is disposed on an endface (66) of the component (3) and is in particular formed as a component of a positioning member (64) or that the heating element (4) is disposed in a ring on an endface of the component (3), in particular on the same side as a spigot (78) connected to the component (3).

## Revendications

1. Dispositif de liaison d'éléments de construction (1, 2, 3) en plastique fusible, c'est que de tuyaux (12, 60) d'une conduite de carburant ou d'une conduite de ce genre à un réservoir de carburant (8) d'un véhicule, comprenant un élément de chauffage (4) par les extrémités (44, 46) duquel de l'énergie électrique est transmise,
**caractérisé en ce que** le dispositif comprend un outil de fixation (50) et **en ce qu'**un élément de construction (3) comprend un corps de fixation (16) pour l'outil de fixation (50), et les deux extrémités (44, 46) de l'élément de chauffage (4) sont conduites sur le corps de fixation (16), et peuvent être mises en prise avec des éléments de contact (56, 57) de l'outil de fixation (50).

2. Dispositif selon la revendication 1, **caractérisé en ce que** les extrémités (44, 46) de l'élément de chauffage (4) sont disposées en vis-à-vis et/ou sont disposées ou configurées sous forme plane, et/ou sont reliées à des éléments de contact sous forme plane sur le corps de fixation (16).

3. Dispositif selon la revendication 1 ou 2, **caractérisé en ce que** le corps de fixation (16) est conçu en forme de bride ou de segment, et/ou comprend sur des surfaces opposées (22, 24) les extrémités ou éléments de contact (44, 46).

4. Dispositif selon une des revendications 1 à 3, **caractérisé en ce que** l'outil de fixation est configuré à la manière d'une pince, et/ou comprend deux mâchoires mobiles (52, 54) opposées l'une à l'autre entre lesquelles peut être serré solidement le corps de fixation (16) et/ou au moyen desquelles peut être réalisée la connexion électrique à un appareil de soudage.

5. Dispositif selon une des revendications 1 à 4, **caractérisé en ce que** l'autre élément de construction (3) contient en tant qu'élément de chauffage (4) un treillis métallique, des brins métalliques, des particules ou des fils métalliques, ou une couche ou un conducteur en plastique et/ou en matériau polymère conducteur électrique, l'alimentation en énergie pour le soudage ayant lieu au moyen du courant électrique, ou par induction ou par la technologie des micro-ondes.

6. Dispositif selon une des revendications 1 à 5, **caractérisé en ce que** l'élément de construction (3) contenant l'élément de chauffage (4) est configuré sous forme d'un manchon à souder qui comprend l'élément de chauffage (4) sur une surface intérieure (30) et une surface extérieure (32), et/ou **en ce que** l'élément de chauffage (4) contient au moins un filament (34, 36).

7. Dispositif selon une des revendications 1 à 5, **caractérisé en ce que** le réservoir de carburant (8) comprend dans la zone d'une ouverture de réservoir (68) le premier élément de construction (1) sous la forme d'un segment annulaire rétracté, et/ou sous forme d'un manchon dépassant au moins partiellement dans l'espace interne (10), et **en ce que** l'extrémité du tuyau d'approvisionnement en carburant (12) est configuré comme le deuxième élément de construction (2), et introduit dans le premier élément de construction (1) avec formation d'une fente annulaire (6), l'autre élément de construction (3) conçu sous forme d'un manchon à souder étant disposé dans la fente annulaire (6).

8. Dispositif selon une des revendications 1 à 6, **caractérisé en ce que** le premier élément de construction (1) est conçu sous forme d'un manchon d'un deuxième tuyau (60), le deuxième élément de construction pouvant être introduit dans le manchon (1) en tant qu'élément de construction (3) formé conjointement avec l'autre élément comme un manchon à souder.

9. Dispositif selon la revendication 5, **caractérisé en ce que** l'autre élément de construction (3) est conçu sous forme d'un manchon à souder, et disposé au moins partiellement dans une fente annulaire (6) dans un premier élément de construction (1) conçu sous forme d'un manchon et dans un deuxième élément de construction (2) conçu sous forme d'une extrémité de tuyau, et/ou **en ce que** le corps de fixation (16) est configuré comme un bord ou une bride conique de préférence, qui dépasse à un angle prédéfini de la surface extérieure du corps de fixation (19).

10. Dispositif selon une des revendications 6 à 8, **caractérisé en ce que** le corps de fixation (16) de l'autre élément de construction (3) en forme de manchon est conduit hors du premier élément de construction (1) conçu sous forme d'un manchon, et formé en s'ouvrant vers l'extérieur de manière au moins partiellement conique.

11. Dispositif selon une des revendications 1 à 5, **caractérisé en ce que** l'élément de chauffage (4) est disposé contre une surface frontale (66) de l'élément de construction (3), et conçu en particulier en tant que composant d'un corps de positionnement (64), ou **en ce que** l'élément de chauffage (4) est disposé de manière circulaire sur une surface frontale de l'élément de construction (3), en particulier sur le même côté qu'un manchon (78) relié à l'élément de construction (3).
